# EUROPEAN PATENT SPECIFICATION

(11) **EP 0 605 940 B1**
(45) Date of publication and mention of the grant of the patent: **05.04.2000**
(21) Application number: 93300124.0
(22) Date of filing: 08.01.1993
(51) Int. Cl.: B23Q 3/06, B25B 11/00

(54) **Numerical control routers with press and/or suction capabilities**
Numerisch gesteuerte Oberfräsen mit Druck- und/oder Unterdruckmöglichkeiten
Fraiseuses munis de moyen de pression et/ou d'aspiration à commande numérique

(43) Date of publication of application: 13.07.1994
(73) Proprietor: HEIAN CORPORATION, Hamamatsu-shi, Shizuoka-ken (JP)
(72) Inventor: Suzuki, Nobuyoshi, Hamamatsu-shi, Shizuoka-ken (JP)
(74) Representative: Gordon, Michael Vincent

(56) References cited:
- DE-A- 3 918 120
- DE-A- 4 101 904
- GB-A- 2 058 658
- US-A- 3 942 411
- US-A- 4 530 627
- US-A- 5 141 212
- PATENT ABSTRACTS OF JAPAN vol. 16, no. 538 (M-1335)9 November 1992 & JP-A-4 201401 ( HEIAN CORP. ) 22 July 1992

## Description

The present invention relates to a numerical control router.

Generally, when a process board is processed by a numerical control router, after a sacrifice board is positioned on a suction table, the process board is positioned on the sacrifice board. Because the sacrifice board and the process board are not flat, but warped, the sacrifice board is not sucked on the suction table and the process board is not sucked on the sacrifice board. Therefore, because it is necessary for men to press the sacrifice board or the process board on the suction table or on the sacrifice board, time for positioning the sacrifice board or the process board is required.

When the process board has a large warp and men cannot press the process board on the sacrifice board, time loss arises because the process board has to be removed and the next process board positioned.

When the process board is processed, chips are scattered on the sacrifice board and the process board. These chips are sucked by hoses connected to a suction device provided with a process head. The operation of the process head becomes complex because the hoses and the suction device are moved with the process head.

It is known from US-A-5141212, acknowledged in the pre-characterising portion of claim 1, for a numerical control router to comprise a head structure provided with a process head having a main shaft motor with a rotary shaft for fixing a tool of a drill or cutter, the head structure being movable on a first rail which is provided with a supporting bed, and a suction table being movable on a second rail which is provided with the supporting bed, whereby a sacrifice board and/or a process board are movable on the suction table relatively to the head structure.

It is also known, from DE-A-3918120, for a work holding device to be capable of being raised or lowered to release or press down upon a pile of boards on a table.

According to the present invention, however, a numerical control router of the afore mentioned kind is characterised in that a supporting frame is also provided with the supporting bed, the supporting frame mounting apparatus for providing press and suction action with respect to at least the sacrifice board or the process board.

It will be appreciated that, with the numerical control router of the present invention, a sacrifice board, or a process board, having a warp can be pressed on the suction table, or the sacrifice board, and chips scattered on the process board, the sacrifice board and the suction table can be sucked.

Preferably:
a plurality of press cylinders and guides having a plurality of press members are mounted on supporting portions of the supporting frame;
suction ducts are driven up and down by cylinders fixed on the supporting frame;
brushes are attached to the ports of the suction ducts;
the suction ducts are driven by three cylinders connected in series; and
the three cylinders can position the suction ports of the suction ducts near the upper faces of the suction table, the sacrifice board and the process board.

Two embodiments of the present invention will now be described, in greater detail and by way of example only, with reference to the accompanying drawings in which:-
Fig. 1 shows a front view of a numerical control router embodying a first embodiment of the present invention;
Fig. 2 shows a plan view of the numerical control router in Fig. 1;
Fig. 3 shows a side view of the numerical control router in Fig. 2;
Fig. 4 shows a front view of the press and suction apparatus in Fig. 1;
Fig. 5 shows a side view of the numerical control router omitting the suction apparatus;
Fig. 6 shows a front view of the press apparatus in Fig. 5;
Fig. 7 shows a side view of the numerical control router omitting the press apparatus;
Fig. 8 shows a front view of the suction apparatus in Fig. 7;
Fig. 9 shows a plan view of a numerical control router according to a second embodiment of the present invention again omitting the press apparatus;
Fig. 10 shows a side view of the numerical control router in Fig. 9;
Fig. 11 shows a front view of the suction apparatus in Fig. 9.;
Fig. 12 shows a plan view of the suction apparatus in Fig. 9; and
Fig. 13 shows a side view of the suction apparatus in Fig. 9.

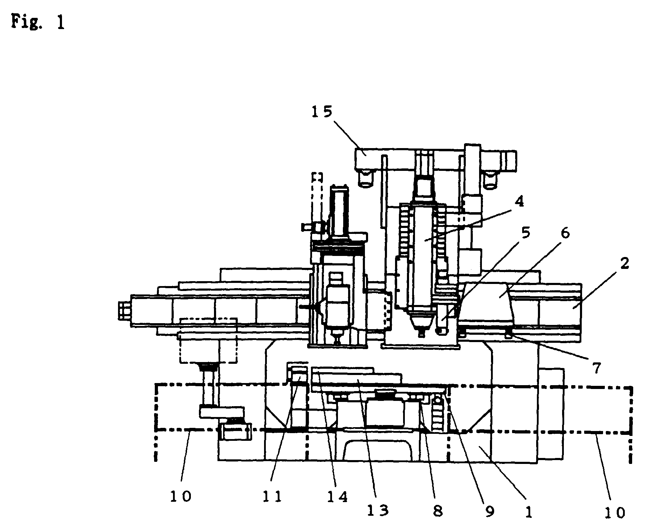

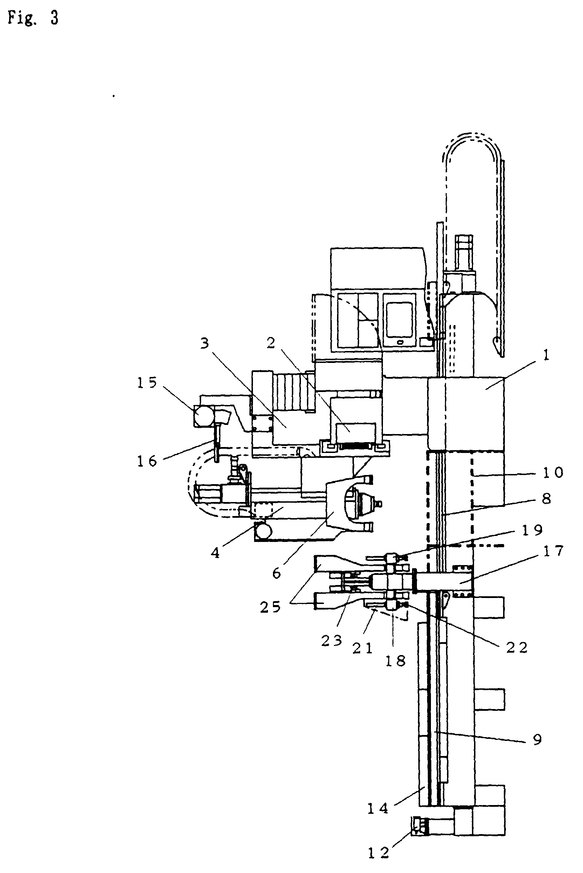

Referring initially to Figs. 1, 2 and 3, a numerical control router is shown including a supporting bed 1, a rail 2 attached to the supporting bed 1, and a head structure 3 mounted on the rail 2 to move left and right in Fig. 1.

A process head 4 is attached to the head structure 3 to move up or down, motors are provided with the process head 4 and a tool, such as a drill or cutter, is attached to the rotary shaft of the main shaft motor. A tool changer 5 and a tool magazine 6 having a plurality of tools 7 are attached to the side portion of the process head 4. Rails 8 are attached to the supporting bed 1 under the head 4 and a suction table 9 is mounted on the rails 8 to move before and behind the head 4. Safety fences 10 are located on both sides. Rule stoppers 11 and 12 are attached to the supporting bed 1 at two neighbouring sides of the suction table 9 slightly away from the suction table 9. A sacrifice board 13 and a process board 14 put on the suction table 9 are positioned by these rule stoppers 11 and 12.

Ducts 15 are attached to the upper portion of the head 4, valves (not shown) opened or closed by cylinders 16 are attached to the ducts 15, and hoses (not shown) are connected to the ducts 15 to suck chips or dust on the suction table 9.

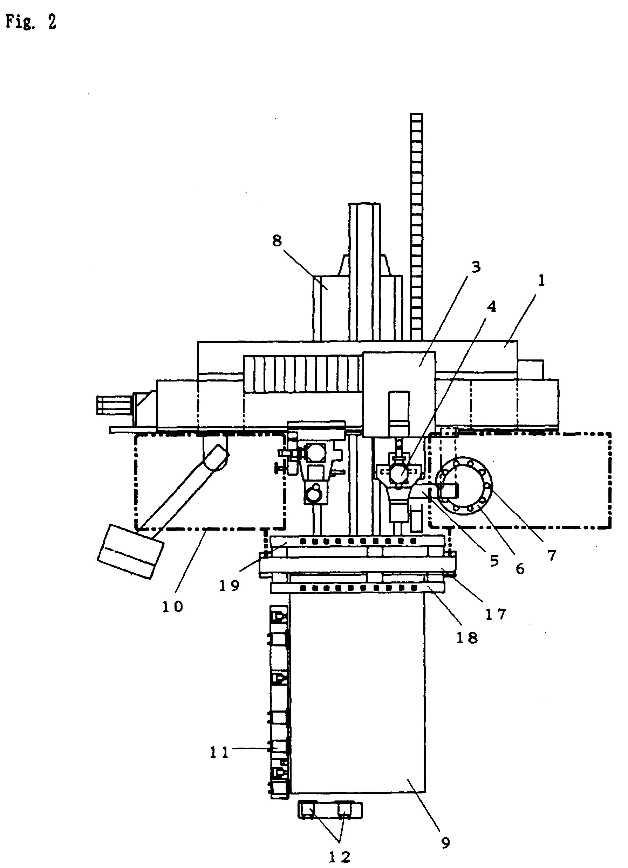

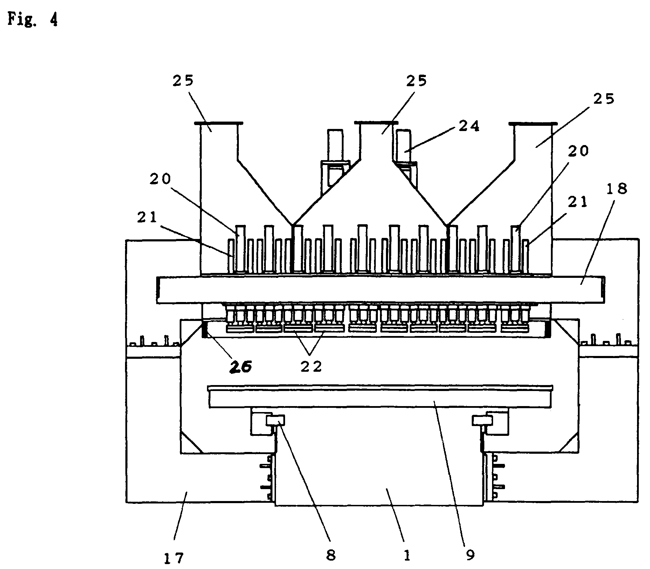

As shown in Figs. 2, 3 and 4, in the press and suction apparatus of the present embodiment, a supporting frame 17 is attached to the supporting bed 1 at the front of the head 4. Supporting portions 18 and 19 are attached to the supporting frame 17 and a plurality of cylinders 20 and guides 21 are mounted on the supporting portions 18 and 19. A plurality of press portions 22 are attached to the moving shafts of the cylinders 20 and the lower portions of the guides 21.

A duct supporting portion 23 is mounted on the supporting frame 17 and cylinders 24 are attached to the duct supporting portion 23. Suction ducts 25 are provided with both sides of the supporting frame 17 to move up and down by the cylinders 24 and brushes 26 are attached to the suction ports of the suction ducts 25.

In the above suction and press apparatus, as shown in Fig. 1, when the sacrifice board 13 having suction holes corresponding to the size of the process board is put on the suction table 9, the sacrifice board 13 is pressed to the rule stoppers 11 and 12 and positioned on the table 9. When the sacrifice board 13 is not flat and is not sucked on the suction table 9, the suction table 9 is moved under the supporting frame 17, the press portions 22 are lowered by the cylinders 20 and the sacrifice board 13 is pressed to suck on the suction table 9.

After the sacrifice board 13 is positioned on the suction table 9, the process board 14 is put on the sacrifice board 13, is pressed to the rule stoppers 11 and 12 and is positioned on the table 9. When the process board 14 is not flat and is not sucked on the table 9, the same as the above, the suction table 9 is moved under the supporting frame 17, the press portions 22 are lowered by the cylinders 20 and the process board 14 is pressed to suck on the suction table 9.

In this embodiment of the present invention, when the sacrifice board 13 and the process board 14 are not flat, the suction table 9 is moved under the supporting frame 17, the sacrifice board 13 and the process board 14 are pressed with the press portions 22 by lowering the cylinders 20 and are sucked on the suction table 9, and by this operation efficiency is improved.

Though chips generated when the process board 14 is processed by the process head 4 are mainly sucked by the sucking hoses, chips scattered widely on the process board 14, the sacrifice board 13 and the suction table 9 cannot be sucked by the suction hoses. Therefore, after the processing of the process board 14 terminates, the suction table 9 is moved under the supporting frame 17, the suction ports of the suction ducts 25 are lowered near the process board 14 by the cylinders 24 and the chips scattered on the process board 14, the sacrifice board 13 and the table 9 are sucked by the suction ducts 25.

Accordingly, when the next process board 14 is changed after the processing of one process board 14 terminates, the suction holes of the sacrifice board 13 are not closed by the chips. Also, when the chips are scattered on the sacrifice board 13, the positioning of the process board 14 is difficult but again this problem is solved by the suction ducts 25.

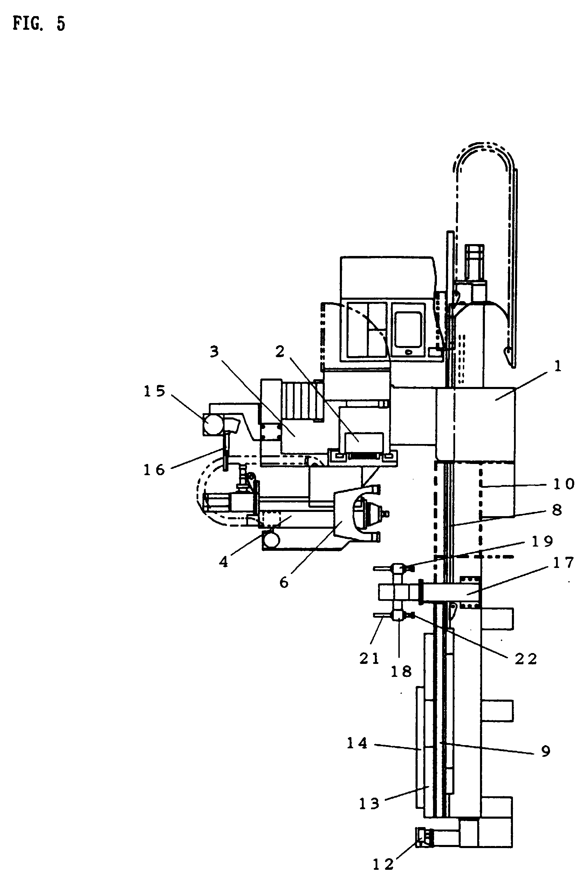

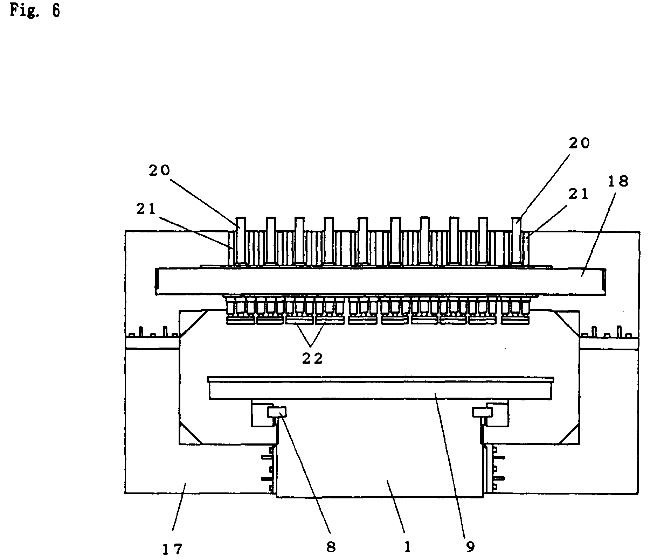

For clarity, Figs. 5 and 6 show the press features including the press portions 22 but omit the suction features including the suction ports 25.

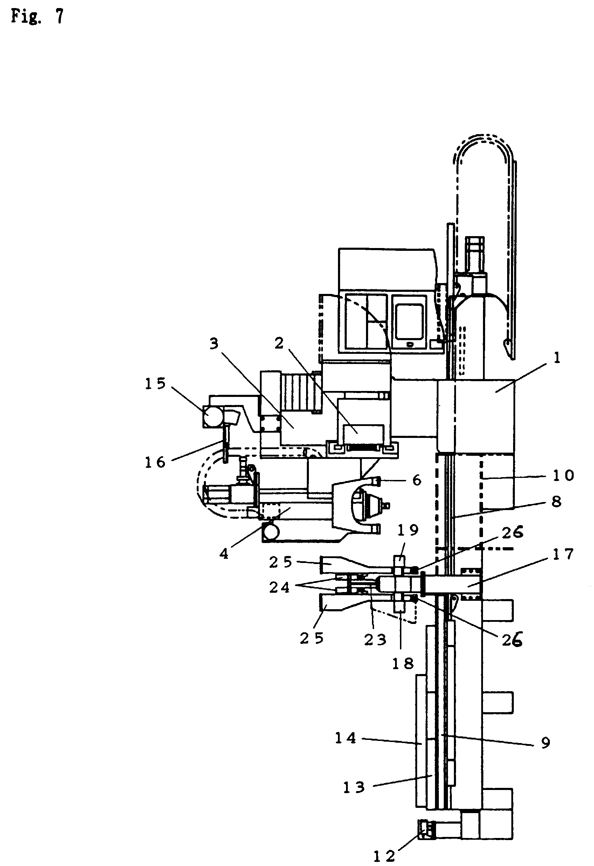

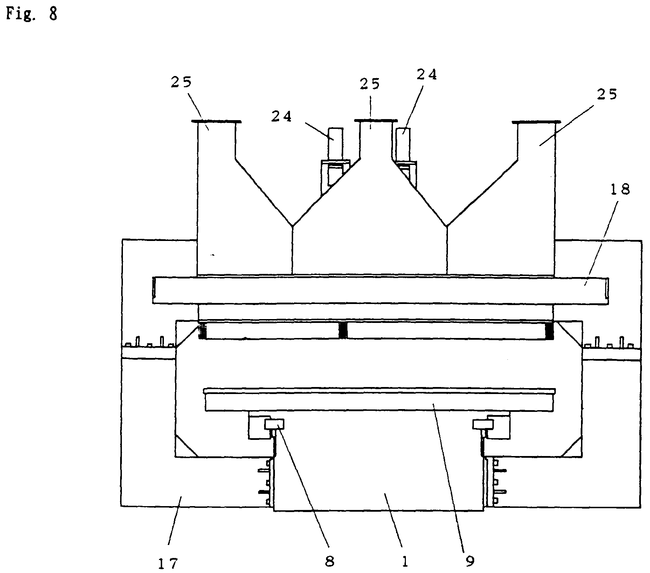

For clarity, Figs. 7 and 8 show the suction features including the suction ports 25 but omit the press features including the press portions 22.

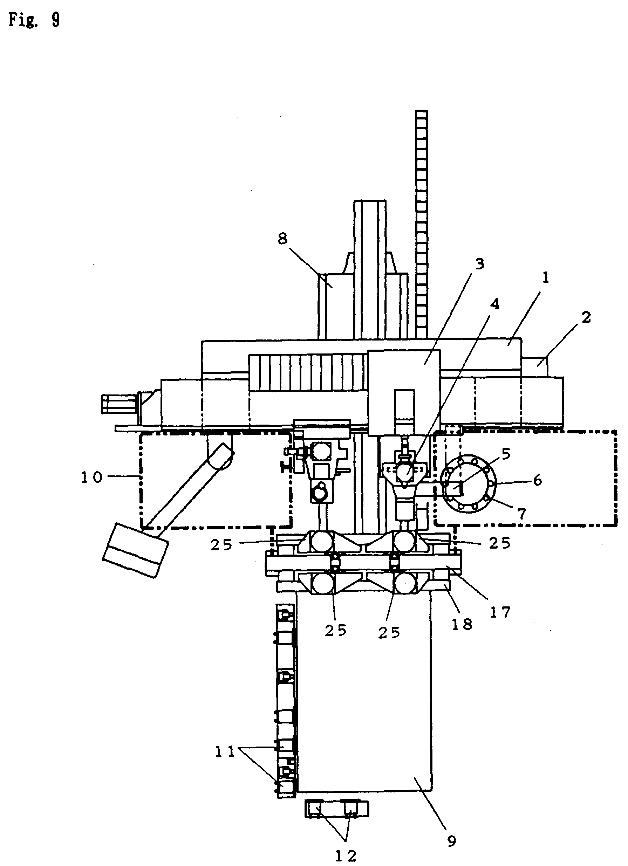

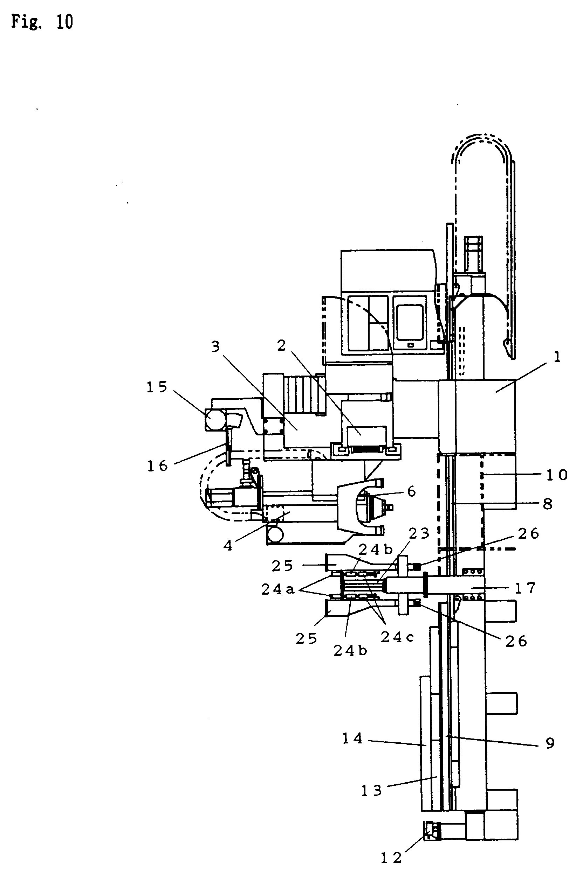

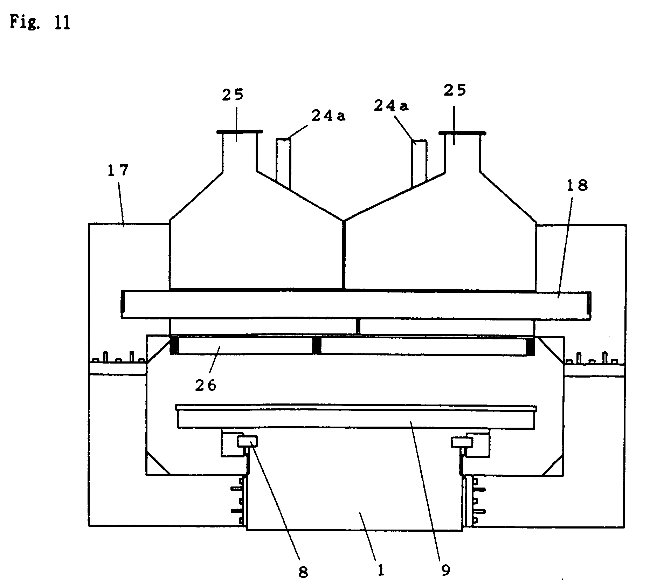

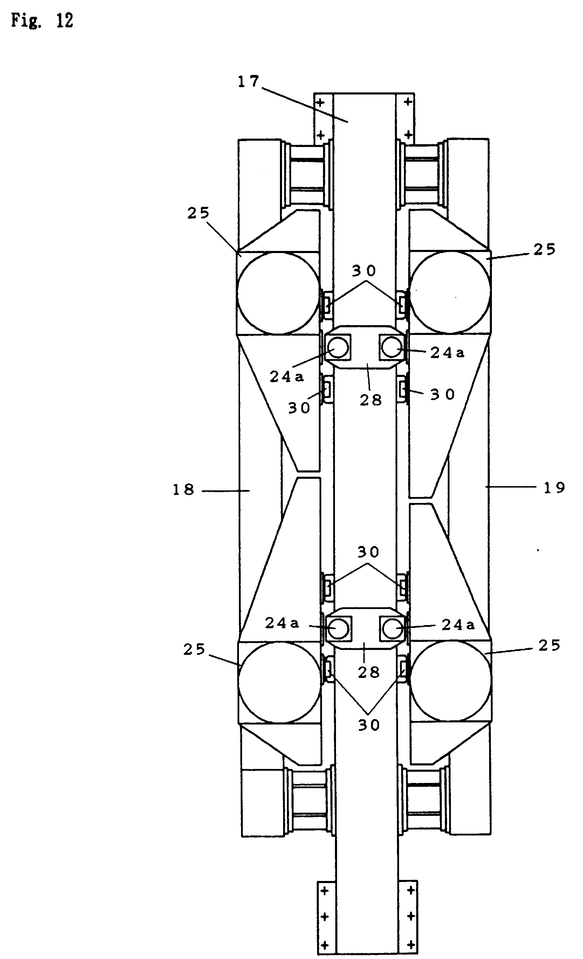

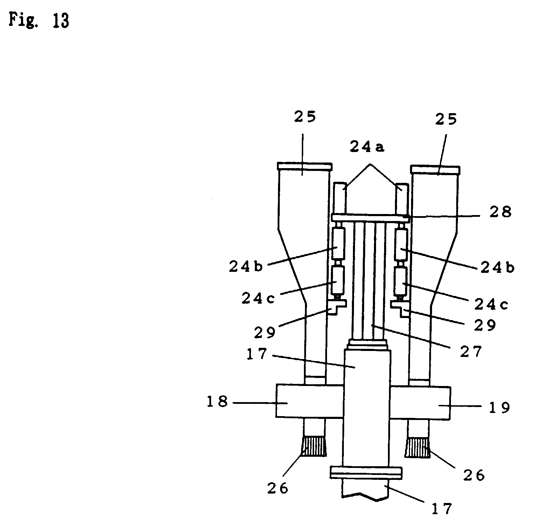

In the embodiment of the present invention shown in Figs. 9 to 13, in which for clarity the press features have again been omitted, a mounting portion 27 is fixed on the supporting frame 17 fixed to the supporting bed 1, mounting plates 28 are attached to the mounting portion 27 and first cylinders 24a are attached to the mounting plates 28. Second cylinders 24b are attached to the operating shafts of the first cylinders 24a, third cylinders 24c are attached to the operating shafts of the second cylinders 24b and supporting members 29 are attached to the operating shafts of the third cylinders 24c.

A step operation means is constructed with the first, second and third cylinders 24a, 24b and 24c.

The suction ducts 25 are connected to the supporting members 29 and are slid up and down with guides 30 attached to the supporting frame 17. The upper cylindrical portions of the suction ducts 25 are connected to the hoses connected to a suction blower device (not shown) and the brushes 26 are attached to the suction ports of the suction ducts 25.

In this embodiment, when the cylinders 24a of the step operation means are driven, the suction ports of the suction ducts 25 are regulated to have a height the same as the upper face of the suction table 9. After the suction blower device is operated, when the upper face of the suction table 9 is passed by the brushes 26 of the suction ports of the suction ducts 25, dust is removed from the upper face of the suction table 9. Then the suction table 9 is returned to the original position thereof, the suction ducts 25 are returned to their original position by driving the first cylinders 24a and the suction blower device is stopped.

In use, when the sacrifice board 13 is put on the suction table 9 and is positioned by pressing against the rule stoppers 11 and 12, the sacrifice board 13 is sucked on the suction table 9. Also, when the process board 14 is put on the sacrifice board 13 on the suction table 9 and is positioned by pressing against the rule stoppers 11 and 12, the process board 14 is sucked on the sacrifice board 13 on the suction table 9. Then the process board 14 is processed in predetermined manner by the process head 4.

After the processing of the process board 14 is terminated, the third cylinders 24c are driven to position the brushes 26 of the suction ports of the suction ducts 25 near the upper face of the process board 14. When the suction blower device is driven, the suction table 9 is driven, the brushes 26 of the suction ports of the suction ducts 25 are passed over the upper face of the process board 14 and the chips and dust on the process board 14 and the sacrifice board 13 are removed. Then the suction table 9 is returned to the original position thereof, the suction ducts 25 is returned at their original position by driving the third cylinders 24c and the suction blower device is stopped.

While the process board 14 is carried out, the brushes 26 of the suction ports of the suction ducts 25 are regulated to a position near the upper face of the sacrifice board 13 by operating the second cylinders 24b. After the suction blower device is driven, when the upper face of the sacrifice board 13 on the suction table 9 is passed through the brushes 26 of the suction ports of the suction ducts 25, the chips and dust on the sacrifice board 13 are removed. Then the suction table 9 is returned to the original position thereof, the suction ducts 25 are returned to their original position by driving the second cylinders 24b and the suction blower device is stopped. The next process board 14 is put on the sacrifice board 13, is positioned by the rule stoppers 11 and 12 and is processed in the same or next process.

As stated above, some of the chips produced when the process board 14 is processed are removed by the hose of the process head 4 whereas the chips scattered on the process board 14, the sacrifice board 13 and the suction table 9 are removed by the suction ducts 25. Accordingly, when the next process board 14 is changed after the processing of the process board 14 is terminated, the suction holes of the sacrifice board 13 are not plugged by chips and suction air does not leak from gaps arising from chips being inserted between the process board 14 and the sacrifice board 13. Furthermore, because the suction ports of the suction ducts 25 can be regulated on the upper faces of the suction table 9, the sacrifice board 13 and the process board 14 by the first, second and third cylinders 24a, 24b and 24c, the chips and dust on the suction table 9, the sacrifice board 13 and the process board 14 are surely removed.

The suction ducts 25 can be driven by a servomotor and gear device instead of the cylinders 24a, 24b and 24c.

## Claims

1. A numerical control router comprises a head structure (3) provided with a process head (4) having a main shaft motor with a rotary shaft for fixing a tool (7) of a drill or cutter, the head structure (3) being movable on a first rail (2) which is provided with a supporting bed (1), and a suction table (9) being movable on a second rail (8) which is provided with the supporting bed (1), whereby a sacrifice board (13) and/or a process board (14) are movable on the suction table (9) relatively to the head structure (3), characterised in that a supporting frame (17) is also provided with the supporting bed (1), the supporting frame (17) mounting apparatus for providing press and suction action with respect to at least the sacrifice board (13) or the process board (14).

2. A numerical control router according to claim 1, characterised in that a plurality of press cylinders (20) and guides (21) having a plurality of press members (22) are mounted on supporting portions (18, 19) of the supporting frame (17).

3. A numerical control router according to claim 1 or claim 2, characterised in that suction ducts (25) are driven up and down by cylinders (24) fixed on the supporting frame (17).

4. A numerical control router according to claim 3, characterised in that brushes (26) are attached to the ports of the suction ducts (25).

5. A numerical control router according to claim 3 or claim 4, characterised in that the suction ducts (25) are driven by three cylinders (24a, 24b, 24c) connected in series.

6. A numerical control router according to claim 5, characterised in that the three cylinders (24a, 24b, 24c) can position the suction ports of the suction ducts (25) near the upper faces of the suction table (9), the sacrifice board (13) and the process board (14).

## Patentansprüche

1. Numerisch gesteuerte Werkzeugmaschine mit einer Kopfstruktur (3), die mit einem Bearbeitungskopf (4) versehen ist, welcher einen Hauptspindel-Motor aufweist mit einer drehbaren Spindel zum Fixieren eines Werkzeugs (7) eines Bohrers oder eines Fräsers, wobei die Kopfstruktur (3) auf einer ersten Schiene (2) beweglich ist, welche an einem Maschinenbett (1) vorgesehen ist, sowie einem Saugtisch (9), welcher auf einer zweiten Schiene (8) beweglich ist, welche an dem Maschinenbrett (1) vorgesehen ist, wodurch ein Opferbrett (13) und/oder ein Bearbeitungsbrett (14) auf dem Saugtisch (9) relativ zu der Kopfstruktur (3) beweglich sind, dadurch gekennzeichnet, daß ein Unterstützungsrahmen (17) ebenfalls an dem Maschinenbett (1) vorgesehen ist, wobei der Unterstützungsrahmen (17) Vorrichtung hält zum Ausüben von Druck- und Saug-Tätigkeit bezüglich mindestens dem Opferbrett (13) oder dem Bearbeitungsbrett (14).

2. Numerisch gesteuerte Werkzeugmaschine nach Anspruch 1, dadurch gekennzeichnet, daß eine Anzahl von Druckzylindern (20) und Führungen (21) mit einer Anzahl von Druckteilen (22) auf den Stützabschnitten (18, 19) des Stützrahmens (17) angebracht sind.

3. Numerisch gesteuerte Werkzeugmaschine nach Anspruch 1 oder Anspruch 2, dadurch gekennzeichnet, daß Saugleitungen (25) von Zylindern (24) auf- und abwärts angetrieben werden, welche auf dem Stützrahmen (17) befestigt sind.

4. Numerisch gesteuerte Werkzeugmaschine nach Anspruch 3, dadurch gekennzeichnet, daß Bürsten (24) an den Anschlußöffnungen der Saugleitungen (25) angebracht sind.

5. Numerisch gesteuerte Werkzeugmaschine nach Anspruch 3 oder Anspruch 4, dadurch gekennzeichnet, daß die Saugleitungen (25) von drei Zylindern (24 a, 24 b, 24 c) angetriebenen sind, welche in Serie geschaltet sind.

6. Numerisch gesteuerte Werkzeugmaschine nach Anspruch 5, dadurch gekennzeichnet, daß die drei Zylinder (24 a, 24 b, 24 c) die Anschlußöffnungen der Saugleitungen (25) nahe den oberen Seiten des Saugtisches (9) des Opferbretts (13) und des Bearbeitungsbretts (14) positionieren können.

## Revendications

1. Défonceuse à commande numérique comportant une structure de tête (3) pourvue d'une tête de traitement (4) ayant un moteur d'arbre principal avec un arbre rotatif pour la fixation d'un outil (7) d'une fraise ou d'un dispositif de coupe, la structure de tête (3) étant mobile sur un premier rail (2) qui est pourvu d'un bâti de support (1), et une table d'aspiration (9) étant mobile sur un deuxième rail (8) qui est pourvu du bâti de support (1), de sorte qu'une plaque sacrificielle (13) et/ou une plaque de traitement (14) sont mobiles sur la table d'aspiration (9) par rapport à la structure de tête (3), caractérisée en ce qu'un cadre de support (17) est également pourvu du bâti de support (1), le cadre de support (17) supportant l'appareil afin de procurer une action de pression et d'aspiration par rapport au moins à la plaque sacrificielle (13) ou la plaque de traitement (14).

2. Défonceuse à commande numérique selon la revendication 1, caractérisée en ce que plusieurs vérins de pression (20) et guides (21) ayant plusieurs éléments de presse (22) sont montés sur des parties de support (18, 19) du cadre de support (17).

3. Défonceuse à commande numérique selon la revendication 1 ou la revendication 2, caractérisée en ce que des conduits d'aspiration (25) sont entraînés vers le haut et vers le bas par des vérins (24) fixés sur le cadre de support (17).

4. Défonceuse à commande numérique selon la revendication 3, caractérisée en ce que des brosses (26) sont fixées sur les orifices des conduits d'aspiration (25).

5. Défonceuse à commande numérique selon la revendication 3 ou la revendication 4, caractérisée en ce que les conduits d'aspiration (25) sont entraînés par trois vérins (24a, 24b, 24c) reliés en série.

6. Défonceuse à commande numérique selon la revendication 5, caractérisée en ce que les trois vérins (24a, 24b, 24c) peuvent positionner les orifices d'aspiration des conduits d'aspiration (25) près des faces supérieures de la table d'aspiration (9), de la plaque sacrificielle (13) et de la plaque de traitement (14).
